# EUROPEAN PATENT APPLICATION

(11) **EP 2 712 226 A1**
(43) Date of publication of application: **26.03.2014**
(21) Application number: 12786641.6
(22) Date of filing: 25.04.2012
(51) Int. Cl.: H04W 28/04, H04W 92/18

(54) **MOBILE COMMUNICATION METHOD**

(30) Priority: 18.05.2011 JP 2011111922
(71) Applicant: NTT DOCOMO, INC., Chiyoda-ku Tokyo 100-6150 (JP)
(72) Inventor: IWAMURA, Mikio, Tokyo 100-6150 (JP); UCHINO, Tooru, Tokyo 100-6150 (JP)
(74) Representative: HOFFMANN EITLE
(86) International application number: PCT/JP2012/061044
(87) International publication number: WO 2012/157415

(57) **Abstract**

HARQ retransmission control in a Ud interface is appropriately performed. A mobile communication method according to the present invention includes a step A of transmitting, by a mobile station UE#1, a data signal to a mobile station UE#2 via a third radio link, and a step B of transmitting, by the mobile station UE#2, transmission acknowledgment information (Ack/Nack) for the data signal to a radio base station eNB or the mobile station UE#1 via a second radio link.

## Description

### [Technical Field]

The present invention relates to a mobile communication method.

### [Background Art]

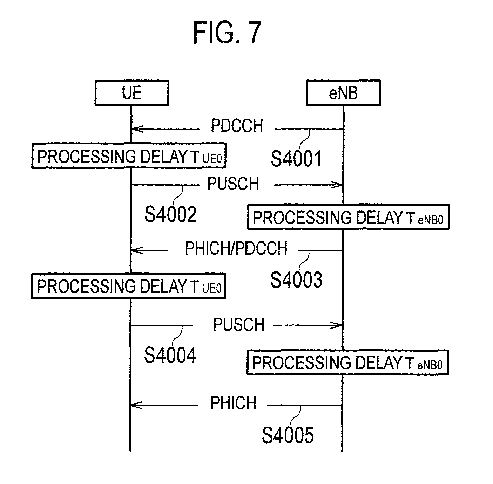

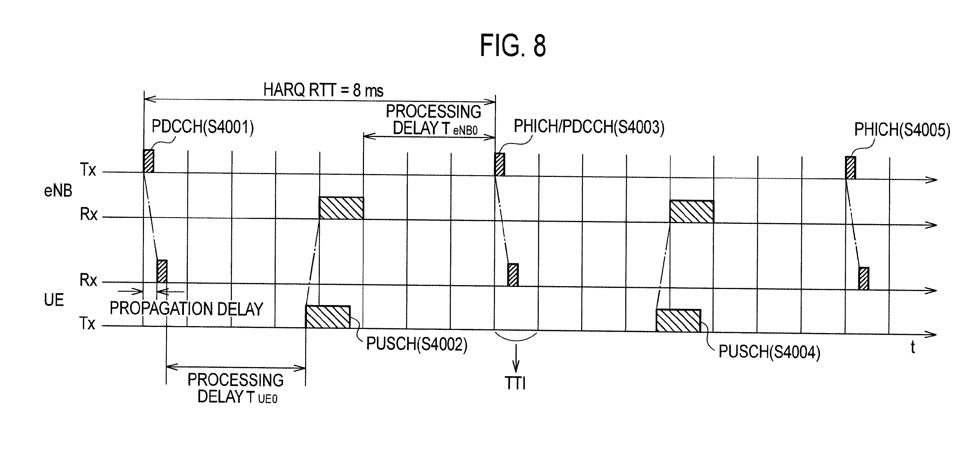

With reference to Fig. 7 and Fig. 8, an operation of HARQ (Hybrid ARQ) used in a conventional LTE (Long Term Evolution) scheme will be described.

As illustrated in Fig. 7 and Fig. 8, in step S4001, a radio base station eNB transmits "UL grant" related to PUSCH (Physical Uplink Shared Channel) to a mobile station UE via PDCCH (Physical Downlink Control Channel).

In step S4002, the mobile station UE generates a transport block TB on the basis of the received "UL grant", and transmits the transport block (a data signal) to the radio base station eNB via the PUSCH.

Furthermore, processing delay until the mobile station UE generates the transport block and transmits the transport block to the radio base station eNB via the PUSCH after receiving the "UL grant" via the PDCCH is "T_{UE0}".

In step S4003, the radio base station eNB decodes the transport block received via the PUSCH, performs error determination, and transmits Nack to the mobile station UE via PHICH (Physical HRAQ Indicator Channel) (or schedules retransmission via the PDCCH).

Furthermore, processing delay until the radio base station eNB receives the transport block from the mobile station UE via the PUSCH, decodes the transport block, performs the error determination, and transmits the Nack to the mobile station UE via the PHICH (or schedules retransmission via the PDCCH) is "T_{eNB0}".

In step S4004, when the Nack is received via the PHICH, the mobile station UE performs HARQ retransmission by using the PUSCH of the same resource as that of a previous time.

In addition, when the radio base station eNB instructs the HARQ retransmission by using the PDCCH instead of the PHICH, it is possible to assign the PUSCH of a resource different from that of the previous time, and to perform the HARQ retransmission.

Consequently, the mobile station UE monitors both the PHICH and the PDCCH, and when there is assignment of the PDCCH, the mobile station UE performs the HARQ retransmission according to the assignment, and when the assignment of the PDCCH is not detected, the mobile station UE performs the HARQ retransmission according to the PHICH.

Furthermore, processing delay until the mobile station UE generates the transport block and retransmits the transport block to the radio base station eNB via the PUSCH after receiving a HARQ retransmission instruction via the PDCCH (or after receiving the Nack via the PHICH) is "T_{UE0}".

In step S4005, the radio base station eNB decodes the transport block received via the PUSCH, performs error determination, and transmits Ack to the mobile station UE via the PHICH.

Furthermore, processing delay until the radio base station eNB receives the transport block from the mobile station UE via the PUSCH, decodes the transport block, performs the error determination, and transmits the Ack to the mobile station UE via the PHICH is "T_{eNB0}".

In addition, in an LTE-Uu interface, RTT (Round Trip Time) of HARQ is defined to 8 ms in consideration of the processing delay "T_{UE0}" and "T_{eNB0}", and the fact that 1TTI (Transmission Time Interval) is 1 ms.

### [Citation List]

### [Non Patent Literature]

[NPL 1] 3GPP TS36.300
[NPL 2] 3GPP TS36.213
[NPL 3] 3GPP TS36.323
[NPL 4] 3GPP TS36.322

### [Summary of Invention]

Unfortunately, in a conventional LTE mobile communication system, even when a plurality of mobile stations UE are located in the same cell (or a cell subordinate to the radio base station eNB), since it is configured such that both a data signal and a control signal are transmitted or received through the radio base station eNB, there is a problem in that a processing load of the radio base station eNB increases.

It may be possible to resolve such a problem by using a feature that a plurality of mobile stations UE transmit and receive a data signal via a radio link in an interface between mobile stations (hereinafter, a Ud interface) without passing through a radio link in a Uu interface that is set between the mobile stations UE and the radio base station eNB.

However, there was a problem that a mechanism of the conventional LTE mobile communication system does not consider a method for performing HARQ retransmission control in the Ud interface.

Therefore, the present invention has been achieved in view of the above-described problems, and an object thereof is to provide a mobile communication method capable of appropriately performing HARQ retransmission control in a Ud interface.

A first characteristic of the present invention is summarized in that a mobile communication method used in a case where a first radio link is set in a radio base station interface between a first mobile station and a radio base station, a second radio link is set in a radio base station interface between a second mobile station and the radio base station, and a third radio link is set in an inter-mobile station interface between the first mobile station and the second mobile station, comprising: a step A of transmitting, by the first mobile station, a data signal to the second mobile station via the third radio link; and a step B of transmitting, by the second mobile station, transmission acknowledgment information for the data signal to the radio base station or the first mobile station via the second radio link.

### [Brief Description of Drawings]

[Fig. 1] Fig. 1 is a diagram illustrating the entire configuration of a mobile communication system according to a first embodiment of the present invention.
[Fig. 2] Fig. 2 is a functional block diagram of a mobile station according to the first embodiment of the present invention.
[Fig. 3] Fig. 3 is a functional block diagram of a radio base station according to the first embodiment of the present invention.
[Fig. 4] Fig. 4 is a sequence diagram illustrating operations of the mobile communication system according to the first embodiment of the present invention.
[Fig. 5] Fig. 5 is a sequence diagram illustrating the operation of the mobile communication system according to a first modification of the present invention.
[Fig. 6] Fig. 6 is a sequence diagram illustrating the operation of the mobile communication system according to a second modification of the present invention.
[Fig. 7] Fig. 7 is a diagram for explaining a conventional mobile communication system.
[Fig. 8] Fig. 8 is a diagram for explaining a conventional mobile communication system.

### [Description of Embodiments]

### (Mobile communication system according to first embodiment of the present invention)

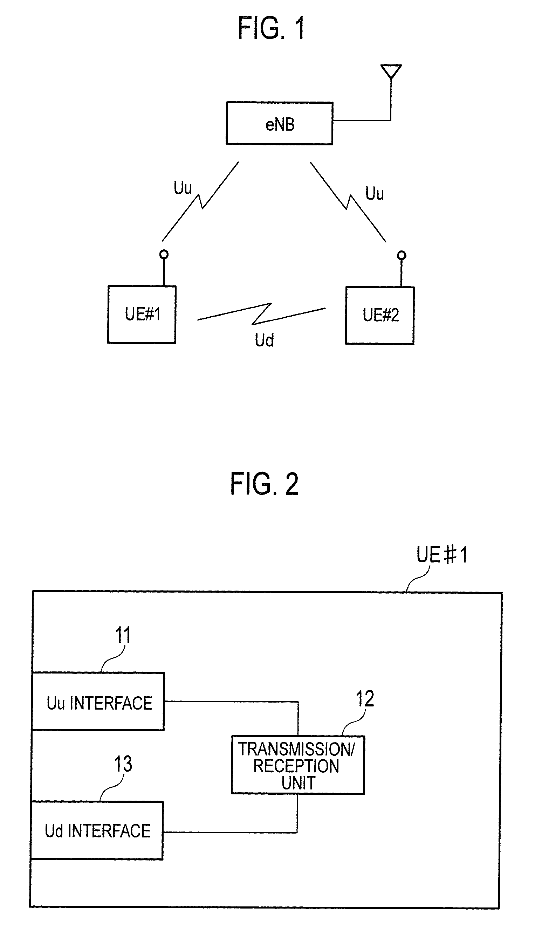

With reference to Fig. 1 to Fig. 4, a mobile communication system according to a first embodiment of the present invention will be described.

The mobile communication system according to the present embodiment is an LTE mobile communication system, and includes a core network (not illustrated) and a radio base station eNB connected to the core network as illustrated in Fig. 1. The present invention is also applicable to cellular mobile communication systems other than the LTE mobile communication system.

A mobile station UE#1 is configured to be able to transmit and receive a data signal to and from a mobile station UE#2 via a third radio link in a Ud interface that is set between the mobile station UE#1 and the mobile station UE#2 without passing through a first radio link in a Uu interface that is set between the mobile station UE#1 and the radio base station eNB.

Furthermore, the mobile station UE#1 is configured to be able to transmit and receive a data signal and a control signal to and from the radio base station eNB via the first radio link in the Uu interface.

Similarly, the mobile station UE#2 is configured to be able to transmit and receive a data signal to and from the mobile station UE#1 via the third radio link in the Ud interface that is set between the mobile station UE#2 and the mobile station UE#1 without passing through the first radio link in the Uu interface that is set between the mobile station UE#2 and the radio base station eNB.

Furthermore, the mobile station UE#2 is configured to be able to transmit and receive a data signal and a control signal to and from the radio base station eNB via a second radio link in the Uu interface.

Since the function of the mobile station UE#1 and the function of the mobile station UE#2 are basically equal to each other, the function of the mobile station UE#1 will be representatively described below. As illustrated in Fig. 2, the mobile station UE#1 includes a Uu interface 11, a transmission/reception unit 12, and a Ud interface 13.

The Uu interface 11 is configured to transmit and receive a control signal and a data signal to and from the radio base station eNB via the first radio link in the Uu interface.

The Ud interface 13 is configured to transmit and receive a data signal to and from the mobile station UE#2 via the third radio link in the Ud interface.

The transmission/reception unit 12 is configured to perform HARQ retransmission control for the data signal that is transmitted via the Uu/Ud interfaces.

Furthermore, the transmission/reception unit 12 may be configured to perform RLC (Radio Link Control) retransmission control for the data signal that is transmitted via the Uu/Ud interfaces. Furthermore, an RLC layer (an RLC entity) is configured to be terminated between the mobile station UE#1 and the mobile station UE#2.

Specifically, in the HARQ retransmission control, since it is probable that an Ack/Nack error occurs, when an error-free service is provided, it is necessary to cover an HARQ residual error by applying RLC-AM.

That is, an RLC-AM entity is terminated between the mobile station UE#1 and the mobile station UE#2, thereby performing RLC retransmission control without passing through the radio base station eNB.

Therefore, transmission and reception of an "RLC Status Report" is directly performed between the mobile station UE#1 and the mobile station UE#1 via the Ud interface.

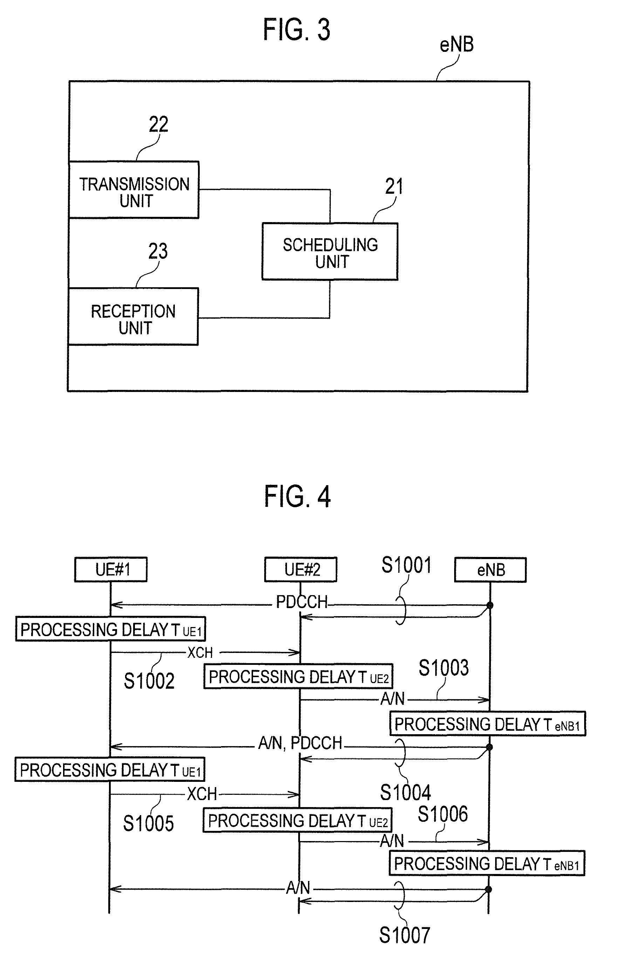

As described in Fig. 3, the radio base station eNB includes a scheduling unit 21, a transmission unit 22, and a reception unit 23.

The scheduling unit 21 is configured to assign, to the mobile station UE#1 and the mobile station UE#2, a transmission opportunity via the Uu interface (PUSCH/PDSCH), that is, a transmission opportunity (UE#1 -> UE#2/UE#2 -> UE#1) via the "UL grant" and "DL resource allocation", or the Ud interface.

The transmission unit 22 is configured to notify the mobile station UE#1 and the mobile station UE#2 of the transmission opportunity (UE#1 -> UE#2/UE#2 -> UE#1) via the "UL grant", the "DL resource allocation", or the Ud interface by using PDCCH via the Uu interface.

Furthermore, the transmission unit 22 is configured to transmit a data signal (a transport block) to the mobile station UE#1 and the mobile station UE#2 by using the PDSCH via the Uu interface.

The reception unit 23 is configured to receive a data signal (a transport block) from the mobile station UE#1 and the mobile station UE#2 by using the PUSCH via the Uu interface.

Furthermore, the reception unit 23 is configured to receive Ack/Nack for a data signal, which is received via the Ud interface, from the mobile station UE#1 and the mobile station UE#2.

Hereinafter, with reference to Fig. 4, the operation of the mobile communication system according to the present embodiment will be described.

As illustrated in Fig. 4, in step S1001, the radio base station eNB notifies the mobile station UE#1 and the mobile station UE#2 of the fact, which indicates that a transmission opportunity (UE#1 -> UE#2) via XCH in the Ud interface is assigned, via the PDCCH.

In step S1002, on the basis of the assignment notification received via the PDCCH, the mobile station UE#1 generates a transport block and transmits the transport block (a data signal) to the mobile station UE#2 via the XCH.

Furthermore, processing delay until the mobile station UE#1 generates the transport block and transmits the transport block to the mobile station UE#2 via the XCH after receiving the assignment notification via the PDCCH is "T_{UE1}".

In step S1003, on the basis of the assignment notification received via the PDCCH, the mobile station UE#2 receives the transport block via the XCH. Then, the mobile station UE#2 decodes the received transport block, performs error determination, and transmits Nack to the radio base station eNB via the Uu interface.

Furthermore, processing delay until the mobile station UE#2 receives the transport block from the mobile station UE#1 via the XCH, decodes the transport block, performs the error determination, and transmits the Nack to the radio base station eNB via the Uu interface is "T_{UE2}".

In step S1004, on the basis of the Nack received from the mobile station UE#2, the radio base station eNB transmits Nack to the mobile station UE#1 and the mobile station UE#2.

Alternatively, when the Nack is received from the mobile station UE#2, the radio base station eNB may instruct the mobile station UE#1 and the mobile station UE#2 to perform HARQ retransmission via the PDCCH.

Furthermore, processing delay until the radio base station eNB transmits Nack to the mobile station UE#1 and the mobile station UE#2 (or instructs the HARQ retransmission via the PDCCH) after receiving the Nack from the mobile station UE#2 is "T_{eNB1}".

In step S1005, when the Nack is received, the mobile station UE#1 performs the HARQ retransmission by using the XCH of the same resource as that of a previous time.

Similarly, when the Nack is received, the mobile station UE#2 receives a data signal sent through HARQ retransmission by using the XCH of the same resource as that of the previous time.

In addition, when the radio base station eNB instructs the HARQ retransmission by using the PDCCH, it is possible to assign the XCH of a resource different from that of the previous time and perform HARQ retransmission.

When the assignment of the PDCCH is detected, the mobile station UE#1 performs the HARQ retransmission via the XCH according to the assignment.

Meanwhile, when the assignment of the PDCCH is not detected, the mobile station UE#1 performs the HARQ retransmission via the XCH according to the Nack received from the radio base station eNB.

Furthermore, when the assignment of the PDCCH is detected, the mobile station UE#2 receives a data signal sent through HARQ retransmission via the XCH according to the assignment.

Furthermore, processing delay until the mobile station UE#1 generates the transport block and retransmits the transport block to the mobile station UE#2 via the XCH after receiving the HARQ retransmission instruction via the PDCCH (or after receiving the Nack) is "T_{UE1}".

In step S1006, the mobile station UE#2 decodes the transport block received via the XCH, performs the error determination, and transmits Ack to the radio base station eNB via the Uu interface.

Furthermore, processing delay until the mobile station UE#2 receives the transport block from the mobile station UE#1 via the XCH, decodes the transport block, performs the error determination, and transmits the Ack to the radio base station eNB via the Uu interface is "T_{UE2}".

In step S1007, on the basis of the Ack received from the mobile station UE#2, the radio base station eNB transmits Ack to the mobile station UE#1 and the mobile station UE#2.

Furthermore, processing delay until the radio base station eNB transmits Ack to the mobile station UE#1 and the mobile station UE#2 after receiving the Ack from the mobile station UE#2 is "T_{eNB1}".

In addition, RTT of HARQ in the Ud interface is "T_{UE1}" + "T_{UE2}" + "T_{eNB1}" + transmission time of the data signal.

Furthermore, since it is considered that "T_{UE2}" is equal to "T_{eNB0}" and "T_{eNB1}" is shorter than "T_{eNB0}", the RTT of the HARQ in the Ud interface is considered to be longer than RTT (8 ms) of HARQ in a normal Uu interface.

However, in accordance with the mobile communication system according to the present embodiment, the radio base station eNB is able to flexibly assign a resource for HARQ retransmission.

### (First Modification)

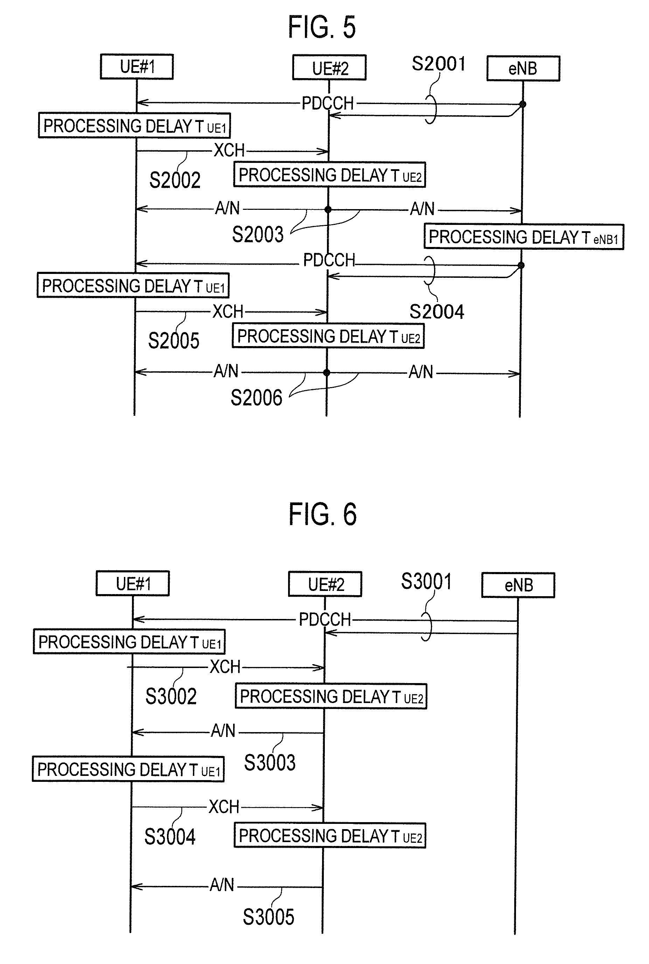

A mobile communication system according to a first modification of the present invention will be described below with reference to Fig. 5 with focusing difference with the mobile communication system according to the above-described first embodiment.

As illustrated in Fig. 5, in step S2001, the radio base station eNB notifies the mobile station UE#1 and the mobile station UE#2 of the fact, which indicates that the transmission opportunity (UE#1 -> UE#2) via the XCH in the Ud interface is assigned, via the PDCCH.

In step S2002, on the basis of the assignment notification received via the PDCCH, the mobile station UE#1 generates a transport block and transmits the transport block (a data signal) to the mobile station UE#2 via the XCH.

Furthermore, processing delay until the mobile station UE#1 generates the transport block and transmits the transport block to the mobile station UE#2 via the XCH after receiving the assignment notification via the PDCCH is "T_{UE1}".

In step S2003, on the basis of the assignment notification received via the PDCCH, the mobile station UE#2 receives the transport block via the XCH. Then, the mobile station UE#2 decodes the received transport block, performs error determination, and transmits Nack to the radio base station eNB and the mobile station UE#1 via the Uu interface and the Ud interface.

Furthermore, processing delay until the mobile station UE#2 receives the transport block from the mobile station UE#1 via the XCH, decodes the transport block, performs the error determination, and transmits Nack to the radio base station eNB and the mobile station UE#1 via the Uu interface and the Ud interface is "T_{UE2}".

In step S2004, on the basis of the Nack received from the mobile station UE#2, the radio base station eNB may instruct the mobile station UE#1 and the mobile station UE#2 to perform HARQ retransmission via the PDCCH.

Furthermore, processing delay until the radio base station eNB instructs the mobile station UE#1 and the mobile station UE#2 to perform the HARQ retransmission via the PDCCH after receiving the Nack from the mobile station UE#2 is "T_{eNB1}".

In step S2005, when the assignment of the PDCCH is detected, the mobile station UE#1 performs the HARQ retransmission by using the XCH of a resource different from that of the previous time according to the assignment.

Meanwhile, when the assignment of the PDCCH by the radio base station eNB is not detected, the mobile station UE#1 performs the HARQ retransmission by using the XCH of the same resource as that of the previous time according to the Nack received from the mobile station UE#2.

Furthermore, when the assignment of the PDCCH is not detected even after the Nack is received from the mobile station UE#2 and then a predetermined period passes, the mobile station UE#1 may perform the HARQ retransmission by using the XCH of the same resource as that of the previous time according to the Nack received from the mobile station UE#2.

The predetermined period may be designated in advance from the radio base station eNB via RRC signaling.

Similarly, when the assignment of the PDCCH by the radio base station eNB is detected, the mobile station UE#2 receives a data signal sent through HARQ retransmission by using the XCH of the resource different from that of the previous time according to the assignment.

Meanwhile, when the assignment of the PDCCH by the radio base station eNB is not detected, the mobile station UE#2 receives a data signal sent through HARQ retransmission by using the XCH of the same resource as that of the previous time according to the Nack transmitted by the mobile station UE#2.

Furthermore, processing delay until the mobile station UE#1 generates the transport block and retransmits the transport block to the mobile station UE#2 via the XCH after receiving the Nack from the mobile station UE#2 is "T_{UE1}".

In step S2006, the mobile station UE#2 decodes the transport block received via the XCH, performs the error determination, and transmits Ack to the radio base station eNB and the mobile station UE#1 via the Uu interface and the Ud interface.

Furthermore, processing delay until the mobile station UE#2 receives the transport block from the mobile station UE#1 via the XCH, decodes the transport block, performs the error determination, and transmits the Ack to the radio base station eNB and the mobile station UE#1 via the Uu interface and the Ud interface is "T_{UE2}".

In addition, RTT of HARQ in the Ud interface is "T_{UE1}" + "T_{UE2}" + "T_{eNB1}" + transmission time of the data signal.

Furthermore, since it is considered that "T_{UE2}" is equal to "T_{eNB0}" and "T_{eNB1}" is shorter than "T_{eNB0}", the RTT of the HARQ in the Ud interface is considered to be longer than RTT (8 ms) of HARQ in a normal Uu interface.

However, in accordance with the mobile communication system according to the present first modification, since the radio base station eNB is able to flexibly assign a resource for HARQ retransmission, it is not necessary to notify Ack/Nack from the radio base station eNB to the mobile station UE#1.

### (Second Modification)

A mobile communication system according to a second modification of the present invention will be described below with reference to Fig. 6 with focusing difference with the mobile communication system according to the above-described first embodiment.

As illustrated in Fig. 6, in step S3001, the radio base station eNB notifies the mobile station UE#1 and the mobile station UE#2 of the fact, which indicates that the transmission opportunity (UE#1 -> UE#2) via the XCH in the Ud interface is assigned, via the PDCCH.

In step S3002, on the basis of the assignment notification received via the PDCCH, the mobile station UE#1 generates a transport block and transmits the transport block (a data signal) to the mobile station UE#2 via the XCH.

Furthermore, processing delay until the mobile station UE#1 generates the transport block and transmits the transport block to the mobile station UE#2 via the XCH after receiving the assignment notification via the PDCCH is "T_{UE1}".

In step S3003, on the basis of the assignment notification received via the PDCCH, the mobile station UE#2 receives the transport block via the XCH. Then, the mobile station UE#2 decodes the received transport block, performs error determination, and transmits Nack to the mobile station UE#1 via the Ud interface.

Furthermore, processing delay until the mobile station UE#2 receives the transport block from the mobile station UE#1 via the XCH, decodes the transport block, performs the error determination, and transmits Nack to the mobile station UE#1 via the Ud interface is "T_{UE2}".

In step S3004, the mobile station UE#1 performs the HARQ retransmission by using the XCH of the same resource as that of a previous time according to the Nack received from the mobile station UE#2.

In such a case, since the mobile station UE#2 transmits no Nack to the radio base station eNB, the radio base station eNB performs no HARQ retransmission instruction using the PDCCH.

Furthermore, processing delay until the mobile station UE#1 generates the transport block and retransmits the transport block to the mobile station UE#2 via the XCH after receiving the Nack from the mobile station UE#2 is "T_{UE1}".

In step S3005, the mobile station UE#2 decodes the transport block received via the XCH, performs the error determination, and transmits Ack to the mobile station UE#1 via the Ud interface.

Furthermore, processing delay until the mobile station UE#2 receives the transport block from the mobile station UE#1 via the XCH, decodes the transport block, performs the error determination, and transmits the Ack to the mobile station UE#1 via the Ud interface is "T_{UE2}".

In addition, RTT of HARQ in the Ud interface is "T_{UE1}" + "T_{UE2}" + transmission time of the data signal.

Consequently, in accordance with the mobile communication system according to the present second modification, when "T_{UE2}" is equal to "T_{eNB0}", it is possible to allow the RTT of the HARQ in the Ud interface to be equal to RTT (8 ms) of HARQ in a normal Uu interface.

Furthermore, in the mobile communication system according to the second modification, the mobile station UE#2 may be configured to further transmit Ack/Nack to the radio base station eNB via the Uu interface.

In this way, in response to the Ack/Nack received from the mobile station UE#2, the radio base station eNB is able to recognize whether the HARQ retransmission resource is used for transmission via the XCH.

The radio base station eNB recognizes the use state of the resource, thereby using an empty resource for another communication, for example, transmission and reception of the Uu interface between the radio base station eNB and another mobile station UE.

Furthermore, in the aforementioned example, in the case of performing the HARQ retransmission in response to the Ack/Nack, the same resource as that of the previous transmission time is used. However, in the case of performing the HARQ retransmission in response to the Ack/Nack, frequency hopping of a resource to be used may be applied.

The characteristics of the present embodiment as described above may be expressed as follows.

A first characteristic of the present embodiment is summarized that a mobile communication method used in a case where a first radio link is set in a Uu interface (a radio base station interface) between a mobile station UE#1 (a first mobile station) and a radio base station eNB, a second radio link is set in a Uu interface between a mobile station UE#2 (a second mobile station) and the radio base station eNB, and a third radio link is set in a Ud interface (an interface between mobile stations) between the mobile station UE#1 and the mobile station UE#2, includes: a step A of transmitting, by the mobile station UE#1, a data signal to the mobile station UE#2 via the third radio link; and a step B of transmitting, by the mobile station UE#2, transmission acknowledgment information (Ack/Nack) for the data signal to the radio base station eNB or the mobile station UE#1 via the second radio link.

In the first characteristic of the present embodiment, the mobile communication method may further include: a step C of transmitting, by the radio base station eNB, a retransmission instruction signal of the data signal via the third radio link to the mobile station UE#1 by using PDCCH (Physical Downlink Control Channel) via the first radio link when the transmission acknowledgment information indicates Nack (a negative transmission acknowledgment result).

In the first characteristic of the present embodiment, the aforementioned retransmission instruction signal may be transmitted also to the mobile station UE#2 via the second radio link.

In the first characteristic of the present embodiment, in the step C, instead of the aforementioned retransmission instruction signal, the radio base station eNB may transmit the transmission acknowledgment information, which is received from the mobile station UE#2 via the second radio link, to the mobile station UE#1 via the first radio link.

In the first characteristic of the present embodiment, in the step B, the mobile station UE#2 may transmit the aforementioned transmission acknowledgment information to the mobile station UE#1 via the third radio link, together with the radio base station eNB.

In the first characteristic of the present embodiment, the mobile communication method may include: a step of retransmitting, by the mobile station UE#1, the data signal on the basis of the retransmission instruction signal, when the retransmission instruction signal is received from the radio base station eNB; and a step of retransmitting, by the mobile station UE#1, the data signal on the basis of the transmission acknowledgment information, which is received from the radio base station eNB, when the retransmission instruction signal is not received from the radio base station eNB.

In the first characteristic of the present embodiment, the mobile communication method may include: a step of receiving, by the mobile station UE#2, the retransmitted data signal on the basis of the retransmission instruction signal, when the retransmission instruction signal is received from the radio base station eNB; and a step of receiving, by the mobile station UE#2, the retransmitted data signal on the basis of the transmission acknowledgment information, which is received from the radio base station eNB, when the retransmission instruction signal is not received from the radio base station eNB.

In the first characteristic of the present embodiment, the mobile communication method may include: a step of retransmitting, by the mobile station UE#1, the data signal on the basis of the retransmission instruction signal, when the retransmission instruction signal is received from the radio base station eNB; and a step of retransmitting, by the mobile station UE#1, the data signal on the basis of the transmission acknowledgment information, which is received from the mobile station UE#2, when the retransmission instruction signal is not received from the radio base station eNB.

In the first characteristic of the present embodiment, the mobile communication method may include: a step of receiving, by the mobile station UE#2, the retransmitted data signal on the basis of the retransmission instruction signal, when the retransmission instruction signal is received from the radio base station eNB; and a step of receiving, by the mobile station UE#2, the retransmitted data signal on the basis of the transmission acknowledgment information, which is transmitted by the mobile station UE#2, when the retransmission instruction signal is not received from the radio base station eNB.

In the first characteristic of the present embodiment, an RLC layer may be terminated between the mobile station UE#1 and the mobile station UE#2.

In the first characteristic of the present embodiment, retransmission of the data signal may be performed by the RLC layer of the mobile station UE#1.

In addition, the operation of the above-mentioned radio base station eNB or mobile station UE#1/UE#2 may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the radio base station eNB and the mobile station UE#1/UE#2. Furthermore, such a storage medium and processor may be arranged in the radio base station eNB and the mobile station UE#1/UE#2 as discrete components.

Thus, the present invention has been explained in detail by using the above-described embodiments; however, it is obvious that for persons skilled in the art, the present invention is not limited to the embodiments explained herein. The present invention can be implemented as a corrected and modified mode without departing the gist and the scope of the present invention defined by the claims. Therefore, the description of the specification is intended for explaining the example only and does not impose any limited meaning to the present invention.

In addition, the entire content of Japanese Patent Application No. 2011-111922 (filed on May 18, 2011) is incorporated in the present specification by reference.

### [Industrial Applicability]

As described above, according to the present invention, it is possible to provide a mobile communication method capable of appropriately performing HARQ retransmission control in a Ud interface.

### [Reference Signs List]

- UE#1, UE#2: mobile station
- 11: Uu interface
- 12: transmission/reception unit
- 13: Ud interface
- eNB: radio base station
- 21: scheduling unit
- 22: transmission unit
- 23: reception unit

## Claims

1. A mobile communication method used in a case where a first radio link is set in a radio base station interface between a first mobile station and a radio base station, a second radio link is set in a radio base station interface between a second mobile station and the radio base station, and a third radio link is set in an inter-mobile station interface between the first mobile station and the second mobile station, comprising:
a step A of transmitting, by the first mobile station, a data signal to the second mobile station via the third radio link; and
a step B of transmitting, by the second mobile station, transmission acknowledgment information for the data signal to the radio base station or the first mobile station via the second radio link.

2. The mobile communication method according to claim 1, further comprising: a step C of transmitting, by the radio base station, a retransmission instruction signal of the data signal via the third radio link to the first mobile station by using a physical downlink control channel via the first radio link when the transmission acknowledgment information indicates a negative transmission acknowledgment result.

3. The mobile communication method according to claim 2, wherein the retransmission instruction signal is transmitted also to the second mobile station via the second radio link.

4. The mobile communication method according to claim 2, wherein in the step C, instead of the retransmission instruction signal, the radio base station transmits the transmission acknowledgment information, which is received from the second mobile station via the second radio link, to the first mobile station via the first radio link.

5. The mobile communication method according to claim 1, wherein in the step B, the second mobile station transmits the transmission acknowledgment information to the first mobile station via the third radio link, together with the radio base station.

6. The mobile communication method according to claim 4, comprising:
a step of retransmitting, by the first mobile station, the data signal on the basis of the retransmission instruction signal, when the retransmission instruction signal is received from the radio base station; and
a step of retransmitting, by the first mobile station, the data signal on the basis of the retransmission acknowledgment information, which is received from the radio base station, when the transmission instruction signal is not received from the radio base station.

7. The mobile communication method according to claim 4, comprising:
a step of receiving, by the second mobile station, the retransmitted data signal on the basis of the retransmission instruction signal when the retransmission instruction signal is received from the radio base station; and
a step of receiving, by the second mobile station, the retransmitted data signal on the basis of the transmission acknowledgment information, which is received from the radio base station, when the retransmission instruction signal is not received from the radio base station.

8. The mobile communication method according to claim 5, comprising:
a step of retransmitting, by the first mobile station, the data signal on the basis of the retransmission instruction signal, when the retransmission instruction signal is received from the radio base station; and
a step of retransmitting, by the first mobile station, the data signal on the basis of the transmission acknowledgment information, which is received from the second mobile station, when the retransmission instruction signal is not received from the radio base station.

9. The mobile communication method according to claim 5, comprising:
a step of receiving, by the second mobile station, the retransmitted data signal on the basis of the retransmission instruction signal when the retransmission instruction signal is received from the radio base station; and
a step of receiving, by the second mobile station, the retransmitted data signal on the basis of the transmission acknowledgment information, which is transmitted by the second mobile station, when the retransmission instruction signal is not received from the radio base station.

10. The mobile communication method according to claim 1, wherein an RLC layer is terminated between the first mobile station and the second mobile station.

11. The mobile communication method according to claim 10, wherein retransmission of the data signal is performed by the RLC layer of the first mobile station.
